# EUROPÄISCHE PATENTSCHRIFT

(11) **EP 3 919 287 B1**
(45) Veröffentlichungstag und Bekanntmachung des Hinweises auf die Patenterteilung: **03.08.2022**
(21) Anmeldenummer: 21177153.0
(22) Anmeldetag: 01.06.2021
(51) Int. Cl.: B60B 17/00

(54) **RADPROFIL**
WHEEL PROFILE
PROFILÉ DE ROUE

(30) Priorität: 05.06.2020 DE 102020114983
(43) Veröffentlichungstag der Anmeldung: 08.12.2021
(73) Patentinhaber: Deutsche Bahn AG, 10785 Berlin (DE)
(72) Erfinder: Kolbe, Thomas, 32427 Minden (DE); Tegtmeier, Timo, 31675 Bückeburg (DE)

(56) Entgegenhaltungen:
- EP-A1- 3 431 307
- WO-A1-2005/032852
- WO-A1-2013/104458
- ES-A2- 2 395 542
- FR-A1- 2 862 254

## Beschreibung

Die Erfindung betrifft ein Radprofil für Räder von Schienenfahrzeugen mit Innenspurkranz und Lauffläche.

Radprofile dieser Art sind z.B. aus den Dokumenten WO 2013/104458 A1, WO 2005/032852 A1, ES 2395542 A2, FR 2862254 A1 und EP 3431307 A1 bekannt.

Eisenbahnräder, die als Teil eines Radsatzes eines Schienenfahrzeuges eingesetzt werden, weisen ein definiertes Profil auf, welches im Zusammenwirken mit dem jeweiligen Schienenprofil das dynamische Fahrverhalten des Radsatzes auf einem Eisenbahngleis entscheidend beeinflusst. In seiner einfachsten Realisierungsform ist das Profil eines Eisenbahnrades als Zylinder oder als ein Kegelstumpf ausgeführt, bei dem sich die Lauffläche beginnend vom Innenspurkranz zum Außenrand des Eisenbahnrades hin konisch verjüngt. Ein aus zwei solchen Rädern gebildeter Radsatz ist in Bezug auf ein aus zwei Schienen gebildetes Eisenbahngleis derart dimensioniert, dass der Radsatz zur Vermeidung des Verklemmens zwischen den beiden Schienen in einer Querrichtung zum Gleis verschiebbar ist. Somit weisen beim Abrollen des Radsatzes auf dem Gleis die Berührpunkte beider Räder mit den jeweiligen Schienen zu allen Zeitpunkten des Abrollvorgangs unterschiedliche Abstände zum Innenspurkranz des jeweiligen Rades auf. Hieraus resultieren unterschiedliche Rollradien an beiden Rädern desselben Radsatzes. Diese Rollradiendifferenz an beiden Rädern führt dazu, dass ein auf zwei Schienen abrollender Radsatz nicht nur eine Längsbewegung entlang der Schienen ausführt, sondern auch eine Querverschiebung erfährt, wobei die seitliche Verschiebung des Radsatzes gegenüber dem Gleis bzw. dessen Schienen eine Funktion der Rollradiendifferenz beider Räder ist (und umgekehrt).

Rein kegelige Radprofile sind jedoch einem hohen Verschleiß unterworfen, da die Lauffläche des Eisenbahnrades die Schiene in einem sehr kleinen Bereich des Radprofils berührt. Zur Verringerung eines solchen durch die kegeligen Radprofile bedingten Verschleißes sind aus dem Stand der Technik sogenannte "Verschleißprofile" bekannt, welche während des Betriebs des Eisenbahnrads formstabil bleiben (d.h. diese Profile bewahren im Verlauf des verschleißbehafteten Betriebs eine nahezu unveränderte Form) und dabei konstante dynamische Fahreigenschaften aufweisen. Ein solches Radprofil ist beispielsweise als sog. "Einheitsprofil S1002" gemäß UIC (= "Union Internationale des Chemins de fer")-Richtlinie 510-1 und EN (= "Europäische Norm") 13715 aus dem Stand der Technik bekannt.

Allerdings haben die Erfahrungen aus der Praxis der vergangenen Jahre gezeigt, dass diese bekannten Verschleißprofile aufgrund zahlreicher Einflussgrößen nicht in allen Anwendungsszenarien hinreichend formstabil sind. Dies bedeutet, dass sich die Lauffläche eines Eisenbahnrades trotz der Verwendung eines solchen sog. "Verschleißprofils" während der Einsatzdauer ungleichmäßig abnutzt und das Radprofil sich hierdurch ungünstig verändern kann. Damit entstehen entweder ein langwelliger Sinuslauf mit niederfrequenten Anregungen, die zu Resonanzen mit Eigenmoden der jeweiligen Fahrzeugkonstruktion führen können, oder kurzwelliger Sinuslauf mit höherfrequenten Anregungen, die zu instabilem Fahrzeuglauf führen können. Diese sicherheits- oder komfortrelevanten Auswirkungen erfordern zusätzliche, in kürzeren Intervallen durchzuführende Reprofilierungsmaßnahmen an den Eisenbahnrädern. Hieraus resultieren nicht nur hohe Kosten und großer Aufwand für die betriebliche Einsatzplanung und das Gewährleisten der Verfügbarkeit der Schienenfahrzeuge, sondern es hat auch negative Auswirkungen auf die gesamte Einsatzdauer sowie die Lebenszykluskosten der Eisenbahnräder.

Der Erfindung liegt daher die Aufgabe zugrunde, ein Radprofil für Räder von Schienenfahrzeugen mit Innenspurkranz und Lauffläche bereitzustellen, welches diese vorgenannten Nachteile beseitigt.

Erfindungsgemäß wird diese Aufgabe in Verbindung mit dem Oberbegriff des Patentanspruches 1 dadurch gelöst, dass die Lauffläche einen von einer Messkreisebene in Richtung zum Innenspurkranz hin orientierten ersten Laufflächen-Abschnitt mit einer ersten positiven Steigung, einen an diesen ersten Laufflächen-Abschnitt stetig anschließenden und von der Messkreisebene in Richtung zum Außenrand des Rads hin orientierten zweiten Laufflächen-Abschnitt mit einer negativen Steigung sowie einen an diesen zweiten Laufflächen-Abschnitt in Richtung zum Außenrand hin stetig anschließenden dritten Laufflächen-Abschnitt mit einer zweiten positiven Steigung aufweist.

Unter einer "positiven" Steigung ist im Kontext der Erfindung eine solche Neigung der Lauffläche zu verstehen, bei der sich der Laufflächendurchmesser entlang einer zur Rotationsachse des Eisenbahnrades parallelen Richtung ausgehend vom Innenspurkranz zum Außenrand des Eisenbahnrades hin verkleinert bzw. sich die Lauffläche des Eisenbahnrades verjüngt. Unter einer "negativen" Steigung ist im Kontext der Erfindung eine zu dieser positiven Steigung entgegengesetzte Neigung der Lauffläche zu verstehen, bei der sich der Laufflächendurchmesser entlang einer zur Rotationsachse des Eisenbahnrades parallelen Richtung ausgehend vom Innenspurkranz zum Außenrand des Eisenbahnrades hin vergrößert. Die positiven Steigungen im ersten und dritten Laufflächen-Abschnitt weisen zwar dieselbe Orientierung, aber nicht notwendigerweise denselben Betrag auf. Während die erste positive Steigung im ersten Laufflächen-Abschnitt in Richtung auf den Innenspurkranz zunimmt und eine ausgerundete Hohlkehle ausbildet, ist die zweite positive Steigung im dritten Laufflächen-Abschnitt in bevorzugter Weise konstant ausgeführt. Die erfinderische Kernidee sieht somit einen zusätzlichen zweiten Laufflächen-Abschnitt mit negativer Steigung vor, der im von der Messkreisebene in Richtung zum Außenrand des Schienenrads hin orientierten Bereich der Lauffläche angeordnet ist, und an den beidseitig, d.h. sowohl in Richtung zum Innenspurkranz als auch in Richtung zum Außenrand des Rades hin, jeweils ein Laufflächen-Abschnitt mit jeweils positiver Steigung anschließen. Eine solche abschnittsweise Vergrößerung des Laufflächendurchmessers stellt eine Abkehr vom bisherigen Stand der Technik dar, gemäß dem die Radprofile im Bereich der Lauffläche entweder durchgehend positive Steigungen aufweisen (d.h. sich in Richtung zum Außenrand des Schienenrades durchgängig verjüngen bzw. ein im Wesentlichen kegelstumpfähnliches Profil aufweisen) oder allenfalls Teilabschnitte ohne Steigung (d.h. mit im Wesentlichen zylindrischem Profil) aufweisen.

Mittels eines solchen erfindungsgemäßen Radprofils wird die sich bei Querverschiebungen des Radsatzes in Bezug auf die Gleislängsachse einstellende Rollradiendifferenz beider Räder eines Radsatzes reduziert. Unter einer Rollradiendifferenz ist in diesem Kontext die Differenz der Berührkreisradien beider Räder eines Radsatzes zu verstehen.

Dies wird dadurch erreicht, dass sich bei einer Querverschiebung des Radsatzes sowohl der Berührpunkt des ersten Rades des Radsatzes mit der ersten Schiene des Gleises als auch der Berührpunkt des zweiten Rades des Radsatzes mit der anderen Schiene desselben Gleises in Laufflächen-Abschnitte verschiebt, die eine zueinander gleich orientierte Neigung aufweisen. Wenn z.B. der Berührpunkt des ersten Rades in Richtung auf dessen Innenspurkranz hin bewegt wird, d.h. sich in dessen ersten Laufflächen-Abschnitt mit positiver Steigung befindet, dann erfährt zeitgleich der Berührpunkt des zweiten Rades eine identische Querbewegung in Richtung auf dessen Außenrand hin und befindet sich somit in dessen zweiten Laufflächen-Abschnitt mit negativer Steigung. Da jedoch das zweite Rad spiegelbildlich zum ersten Rad am Radsatz angebracht ist, weisen beide Laufflächen-Abschnitte (d.h. der erste Laufflächen-Abschnitt am ersten Rad und der zweite Laufflächen-Abschnitt am zweiten Rad) gegenüber ihrer Umwelt gleich orientierte Neigungen auf. Dies bedeutet also, dass sich bei der Anwendung eines erfindungsgemäßen Radprofils an beiden Rädern desselben Radsatzes sowohl der erste Berührpunkt des ersten Rades mit der ersten Schiene des Gleises als auch der zweite Berührpunkt des zweiten Rades mit der zweiten Schiene desselben Gleises bei Querverschiebungen in Laufflächen-Abschnitten mit gleichgerichteter Neigung befinden. Somit nimmt bei einer vorgegebenen Querverschiebung des Radsatzes die Rollradiendifferenz beider Räder weniger stark zu als bei Rädern mit herkömmlichen, aus dem Stand der Technik bekannten Radprofilen.

Dies bedeutet im Umkehrschluss aber zugleich auch, dass sich der Radsatz bei kinematisch vorgegebener Rollradiendifferenz stärker in Querrichtung (d.h. quer zu Gleislängsachse) verschieben muss, als bei Anwendung eines herkömmlichen nicht-erfindungsgemäßen Radprofils. Durch eine solche Verstärkung der Querverschiebung des Radsatzes wird verhindert, dass die Berührpunkte zwischen Rad und Schiene dauerhaft in zu engen Bereichen bleiben und dort einen übermäßigen lokalen Verschleiß des Radprofils verursachen. Stattdessen wird das Verschleißgeschehen auf einen größeren Bereich der Lauffläche des Radprofils ausgedehnt und somit letztlich gleichmäßiger über diese verteilt. Hieraus resultiert eine bessere Formstabilität des erfindungsgemäßen Radprofils. Die Erfindung ermöglicht somit ein gleichmäßigeres Verschleißen des Radprofils über den gesamten Bereich von dessen Lauffläche.

Auf diese Weise wirkt sich die Erfindung insbesondere bei Schienenfahrzeugen des schnellfahrenden Personenverkehrs positiv aus, da der Anteil der bevorzugt geradlinig oder nur schwach gekrümmt trassierten Gleisstrecken in dem von diesen Fahrzeugen befahrenen Streckennetz stetig zunimmt.

In bevorzugter Weise sieht die Erfindung vor, dass der Wechsel vom ersten Laufflächen-Abschnitt zum zweiten Laufflächen-Abschnitt in einem Bereich von +/- 20 mm beiderseits der Messkreisebene erfolgt. Ebenso ist es besonders vorteilhaft, wenn sich erster und zweiter Laufflächen-Abschnitt in einem Bereich von jeweils maximal 45 mm beiderseits der Messkreisebene erstrecken. Diese vorgenannten Bereiche erweisen sich in Kombination mit den gegebenen Schienenprofilen und Trassierungsbedingungen als besonders vorteilhaft.

Die Erfindung sieht ferner vor, dass der zweite Laufflächen-Abschnitt eine negative Steigung von maximal 1:10 aufweist. Diese muss jedoch nicht konstant ausgeführt sein. Auf diese Weise werden Amplitude und Frequenz des Sinuslaufes eines mit erfindungsgemäßen Radprofilen ausgerüsteten Radsatzes durch einen konformen Rad-Schiene-Kontakt nahezu konstant gehalten, was sich positiv auf das Fahrverhaltens eines Schienenfahrzeuges auswirkt.

Die vorliegende Erfindung wird nachfolgend anhand eines Ausführungsbeispiels und dazugehöriger Zeichnungen näher erläutert. Es zeigen
- Figur 1:: schematische Darstellung eines Eisenbahnrades mit erfindungsgemäßem Radprofil
- Figur 2:: schematische Darstellung der Berührgeometrie zwischen einem Eisenbahnrad mit herkömmlichem Radprofil (gemäß Stand der Technik) und einer Eisenbahnschiene
- Figur 3:: schematische Darstellung der Berührgeometrie zwischen einem Eisenbahnrad mit erfindungsgemäßem Radprofil und einer Eisenbahnschiene

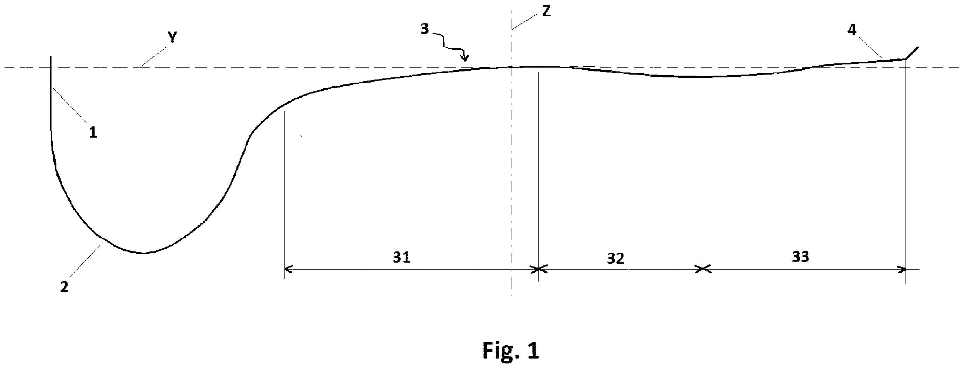

In Figur 1 ist ein Eisenbahnrad mit erfindungsgemäßem Radprofil dargestellt. Das Radprofil umfasst in üblicher Weise einen Radrücken (1), einen Innenspurkranz (2), der im Wesentlichen die horizontale Führung des Rades auf der Schiene und somit die Sicherheit gegen Entgleisen des Rades gewährleistet, sowie eine Lauffläche (3), welche das Rad in vertikaler Richtung gegen die Schiene abstützt. Die Lauffläche untergliedert sich in drei Laufflächen-Abschnitte (31, 32, 33), wobei ein erster Laufflächen-Abschnitt (31), der dem Innenspurkranz (2) am nächsten liegt, und ein dritter Laufflächen-Abschnitt (33), der dem Außenrand (4) des Eisenbahnrades am nächsten liegt, jeweils positive Steigungen aufweisen. Die Steigungen des ersten und dritten Laufflächen-Abschnitts weisen zwar dieselbe Orientierung auf, können aber im Übrigen voneinander abweichen. Ferner sind in Figur 1 die vertikale Bezugsebene durch den Messkreis (Z) und die horizontale Bezugsebene (Y) dargestellt. Beide Bezugsebenen (Y, Z) bilden das Koordinatensystem des Rades aus. Der Messkreis ist ein parallel zum Radrücken (1) liegender Schnittkreis durch die Lauffläche des Rades, wobei die beiden Messkreise der zu einem gemeinsamen Radsatz gehörigen Räder symmetrisch zur vertikalen Ebene in der Radsatzmitte ausgerichtet sind. Die horizontale Bezugsebene (Y) ist rechtwinklig zur Messkreisebene (Z) ausgeführt und schneidet diese an ihrem Profilpunkt (d.h. am Schnittpunkt der Messkreisebene (Z) mit dem Radprofil). Dieser Schnittpunkt von Messkreisebene (Z) und horizontaler Bezugsebene (Y) bildet den Nullpunkt für alle quantitativen Maßangaben zur Definition des Radprofils.

Die Erfindung verkörpert sich in der Existenz eines zweiten Laufflächen-Abschnitts (32), der zwischen den ersten und dritten Laufflächen-Abschnitten (31, 33) angeordnet ist und - im Gegensatz zu diesen - eine negative Steigung aufweist. Diese negative Steigung beträgt maximal 1:10, wobei dieser Steigungswert nicht konstant über die gesamte Breite des zweiten Laufflächen-Abschnitts (32) ausgeführt sein muss. Der Übergang zwischen dem ersten Laufflächen-Abschnitt (31) und dem zweiten Laufflächen-Abschnitt (32) liegt maximal 20 mm von der Messkreisebene (A) zum Außenrand (4) des Rads hin entfernt.

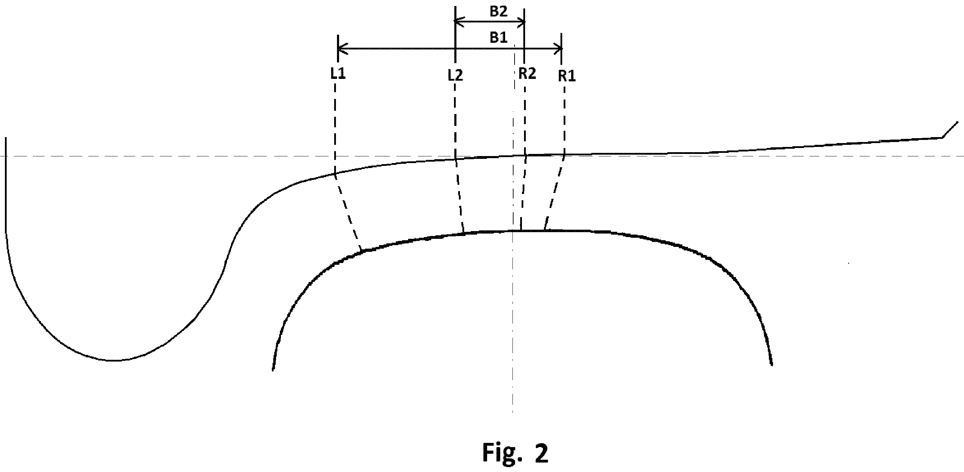

In Figur 2 ist die Berührgeometrie zwischen einem Eisenbahnrad mit herkömmlichem, aus dem Stand der Technik bekannten Radprofil und einer Eisenbahnschiene dargestellt. Während des sinusförmigen Radsatzlaufes auf der Schiene verändert sich der Berührbereich zwischen Rad und Schiene fortlaufend, wobei L1 bzw. L2 die innenliegenden (im Sinne von "zum Innenspurkranz (2) hin") Berührpunkte des rechten Rades mit der Schiene beim Durchfahren eines ersten bzw. zweiten Linksbogens mit jeweils unterschiedlichen Bogenradien und die Punkte R1 bzw. R2 die außenliegenden (im Sinne von "zum Außenrand (4) hin") Berührpunkte des rechten Rades mit der Schiene beim Durchfahren eines ersten bzw. zweiten Rechtsbogens mit jeweils unterschiedlichen Bogenradien darstellen. Hieraus resultieren ein erster Berührbereich (B1) für kleine Bogenradien (im Sinne von "enger Bogen") sowie ein zweiter Berührbereich (B2) für große Bogenradien (im Sinne von "weiter Bogen").

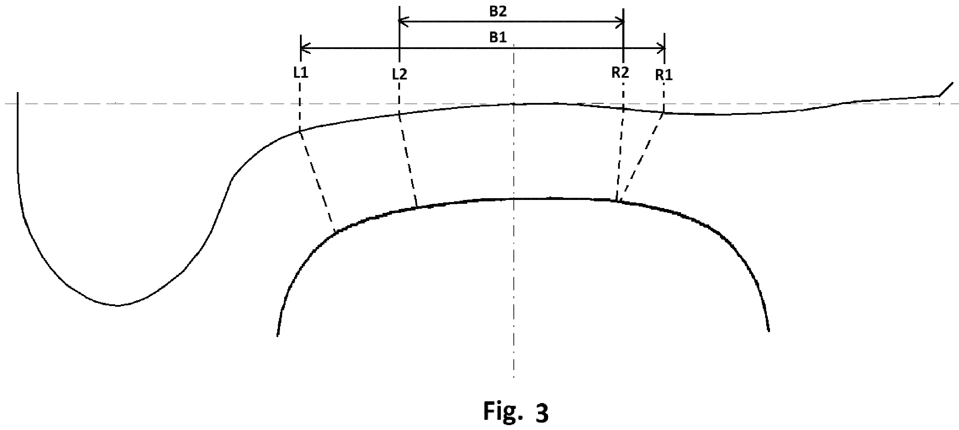

In Figur 3 ist die Berührgeometrie zwischen einem Eisenbahnrad mit einem erfindungsgemäßen Radprofil und einer Eisenbahnschiene dargestellt. Einerseits verlagern sich die Positionen der innenliegenden Berührpunkte (L1, L2) in Richtung zum Innenspurkranz, andererseits verschieben sich auch die außenliegenden Berührpunkte (R1, R2) deutlich in Richtung zum Außenrand des Rades. Die Berührpunkte zwischen Rad und Schiene verteilen sich somit bei einem erfindungsgemäßen Radprofil in einem breiteren Berührbereich (B1, B2), was einem übermäßigen lokalen Verschleiß des Radprofils entgegenwirkt und den Verschleiß gleichmäßiger über die gesamte Lauffläche des Rades verteilt. Somit wird ein verschleißkonformes Radprofil ermöglicht.

### Bezugszeichenliste:

- 1: Radrücken
- 2: Innenspurkranz
- 3: Lauffläche
- 31: erster Laufflächen-Abschnitt
- 32: zweiter Laufflächen-Abschnitt
- 33: dritter Laufflächen-Abschnitt
- 4: Außenrand
- Z: Messkreisebene
- Y: horizontale Bezugsebene
- L: linksseitige (bzw. innere) Begrenzung des Berührbereiches zwischen Rad und Schiene
- R: rechtsseitige (bzw. äußere) Begrenzung des Berührbereiches zwischen Rad und Schiene
- B: Breite des Berührbereiches

## Patentansprüche

1. Radprofil für Räder von Schienenfahrzeugen mit Innenspurkranz (2) und Lauffläche (3),
**dadurch gekennzeichnet, dass**
die Lauffläche (3) einen von einer Messkreisebene (Z) in Richtung zum Innenspurkranz (2) hin orientierten ersten Laufflächen-Abschnitt (31) mit einer ersten positiven Steigung, einen an diesen ersten Laufflächen-Abschnitt (31) stetig anschließenden und von der Messkreisebene (Z) in Richtung zum Außenrand (4) des Rads hin orientierten zweiten Laufflächen-Abschnitt (32) mit einer negativen Steigung sowie einen an diesen zweiten Laufflächen-Abschnitt (32) in Richtung zum Außenrand (4) hin stetig anschließenden dritten Laufflächen-Abschnitt (33) mit einer zweiten positiven Steigung aufweist.

2. Radprofil nach Patentanspruch 1, **dadurch gekennzeichnet, dass** der Wechsel vom ersten Laufflächen-Abschnitt (31) zum zweiten Laufflächen-Abschnitt (32) in einem Bereich von +/- 20 mm beiderseits der Messkreisebene (Z) erfolgt.

3. Radprofil nach einem der Patentansprüche 1 oder 2, **dadurch gekennzeichnet, dass** sich erster und zweiter Laufflächen-Abschnitt (31, 32) in einem Bereich von jeweils maximal 45 mm beiderseits der Messkreisebene (Z) (A) erstrecken.

4. Radprofil nach einem der Patentansprüche 1 bis 3, **dadurch gekennzeichnet, dass** der zweite Laufflächen-Abschnitt (32) eine negative Steigung von maximal 1:10 aufweist.

## Claims

1. Wheel profile for wheels of rail vehicles having an inner wheel flange (2) and a running surface (3),
**characterised in that**
the running surface (3) has a first running-surface portion (31), oriented from a measuring circle plane (Z) in the direction of the inner wheel flange (2), having a first positive gradient, a second running-surface portion (32), adjoining continuously on this first running-surface portion (31) and oriented from the measuring circle plane (Z) towards the outer edge (4) of the wheel, having a negative gradient, and a third running-surface portion (33), adjoining continuously on this second running-surface portion (32) in the direction of the outer edge (4), having a second positive gradient.

2. Wheel profile according to claim 1, **characterised in that** the change from the first running-surface portion (31) to the second running-surface portion (32) takes place in a scope of +/- 20 mm on both sides of the measuring circle plane (z).

3. Wheel profile according to any of claims 1 or 2, **characterised in that** first and second running-surface portions (31, 32) extend in a scope of in each case maximum 45 mm on both sides of the measuring circle plane (Z) (A).

4. Wheel profile according to any of claims 1 to 3, **characterised in that** the second running-surface portion (32) has a negative gradient of maximum 1:10.

## Revendications

1. Profilé de roue pour des roues de véhicules ferroviaires avec un boudin de roue intérieur (2) et une surface de roulement (3),
**caractérisé en ce que**
la surface de roulement (3) présente une première section de surface de roulement (31) avec une première pente positive orientée à partir d'un plan de circuit de mesure (Z) en direction du boudin de roue intérieur (2), une deuxième section de surface de roulement (32) avec une pente négative, qui est contiguë de manière continue à cette première section de surface de roulement (31) et est orientée à partir du plan de circuit de mesure (Z) en direction du bord extérieur (4) de la roue, et une troisième section de surface de roulement (33) avec une seconde pente positive contiguë de manière continue à cette deuxième section de surface de roulement (32) en direction du bord extérieur (4).

2. Profilé de roue selon la revendication 1, **caractérisé en ce que** le changement de la première section de surface de roulement (31) vers la deuxième section de surface de roulement (32) s'effectue dans une étendue de +/- 20 mm des deux côtés du plan de circuit de mesure (z).

3. Profilé de roue selon l'une des revendications 1 ou 2, **caractérisé en ce que** les première et deuxième sections de surface de roulement (31, 32) s'étendent dans une étendue de 45 mm au maximum des deux côtés du plan de circuit de mesure (Z) (A).

4. Profilé de roue selon l'une des revendications 1 à 3, **caractérisé en ce que** la deuxième section de surface de roulement (32) présente une pente négative de 1:10 maximum.
